# EUROPEAN PATENT SPECIFICATION

(11) **EP 0 905 072 B1**
(45) Date of publication and mention of the grant of the patent: **28.05.2003**
(21) Application number: 97500152.0
(22) Date of filing: 02.09.1997
(51) Int. Cl.: B65H 23/06, F16D 65/06

(54) **A braking device for the bar supporting the roll of paper or the like in printers**
Bremse für eine die Papierrolle tragende Welle im Drucker
Dispositif de freinage de la barre supportant le rouleau de papier dans une imprimante

(43) Date of publication of application: 31.03.1999
(73) Proprietor: Hewlett-Packard Company, A Delaware Corporation, Palo Alto, CA 94304 (US)
(72) Inventor: Brugue, Joaquim, 08190 Sant Cugat del Vallès (Barcelona) (ES); Cano, Emilio, 08190 Sant Cugat del Vallès (Barcelona) (ES)
(74) Representative: Duran Moya, Luis-Alfonso

(56) References cited:
- DE-A- 2 207 130
- DE-B- 1 218 473
- DE-U- 8 606 662
- GB-A- 1 287 039
- US-A- 5 562 034
- PATENT ABSTRACTS OF JAPAN vol. 010, no. 151 (M-483), 31 May 1986 & JP 61 006436 A (UEDASA CHIYUUZOUSHIYO:KK;OTHERS: 01), 13 January 1986,

## Description

The present invention relates to a device for the permanent braking of a bar for supporting a roll of paper or other print medium used in printers.

The application of permanent braking to the bar supporting the roll of the medium which is to receive the printing in printers achieves automatic correction of misalignments of the print medium, constituted by paper or print medium of another type. This eliminates the need to realign the print medium after its initial loading and alignment which are carried out manually at the start of the printing operation.

In computer-controlled printers of this type in which the print medium is supplied from the front portion of the machine and in which there are drive means for entraining the medium and passing it through the interior of the printer in order to receive the printing and finally extracting the printing media, devices have previously been disclosed for applying a certain amount of braking to the print medium, particularly by means of an arm which is made of plastics material and which, owing to a spring effect, acts on the braking surface of an element in the form of a hub associated with the bar supporting the roll of paper or the like. In the said known device, the same plastics material is used for the casing body, the arm and the braking surface.

However, in the previously-known devices, control of the taughtness was not very precise, which constitutes a disadvantage, particularly in the case of printers which use rolls of considerable dimensions for print media of various types.

Moreover, in the previously known designs having braking devices on both ends of the bar, the braking action was more difficult to control and less foreseeable in its effects, for which reason said braking action was somewhat different from one printer to another.

At the same time, as the material in contact with the braking hub was of similar characteristics to this latter, this being determined by the fact of being of the same material than that of the oscillating carrying arm, the braking effect was different at the initial stage of rotation of the hub in comparison to the normal or stabilised stage of said rotation.

DE 86 06 662.5 U discloses a braking system comprising a braking shoe and a hub coupled at one and of the support bar.

A principal object of the present invention is to achieve a uniform braking effect and hence uniform tautness of the print medium for the various phases of the rotation of the bar supporting the roll of paper or similar print medium.

Another object of the present invention consists of the disclosure of means for enabling the braking of the bar supporting the roll of paper or the like to be carried out solely from one end of the said bar.

Another object of the present invention consists of the achievement of a more favourable coefficient of friction owing to the configuration of the novel braking device.

Another additional object of the present invention consists of the provision of a device for braking a bar carrying a roll of paper or the like which is structurally simpler and less expensive than currently-known devices.

Objects of the present invention are solved by the features of claim 1.

In one aspect, the invention provides for the formation of a braking assembly which can be applied to only one end of the bar carrying the roll of paper or the like, on which end a hub is provided, the hub having a covering casing of a metal, preferably stainless steel acted on by at least a pair of shoes made of synthetic material, disposed opposite one another on respective shoe-holders which are acted on by opposing elastic means, preferably springs in order to bring about a uniform braking effect on the hub coupled to the end of the support bar. The braking shoes are housed in the shoe-holders so as to be movable axially in housings of matching shape of the said shoe-holders, the shoes being retained by means of resilient tabs which may be formed integrally with the shoe-holders and which have axial retaining teeth.

Clearly, if desired, more than one pair of shoes, also diametrally opposed, may be provided. In order to achieve better braking, the shoes have respective regions of contact with the hub coupled tc the support bar, these regions being situated close to the ends of the shoe, separated by a recessed region which does not establish contact with the hub.

Moreover, by constituting the braking shoes in form of separate elements of a material which does not depend on the material for the carrying arms, it is possible to select the most adequate materials to obtain the desired friction coefficient.

In order that the effort from the elastic means, preferably springs, acting on the shoe-holder arm does not impose offset efforts, said elastic means will act on parallel directions, on both sides of the median plane of the shoe- holder arm, in order that the resulting effort be substantially contained on said medium plane avoiding any offsetting of the effort.

At the other end, the bar carrying the print roll is acted on solely by the axial effort of a spring incorporated in the housing receiving the end of the bar.

For a better understanding, some drawings of a braking device which can be applied to a bar carrying a roll of paper or the like in printers and which incorporates the present invention are appended by way of non-limiting example.

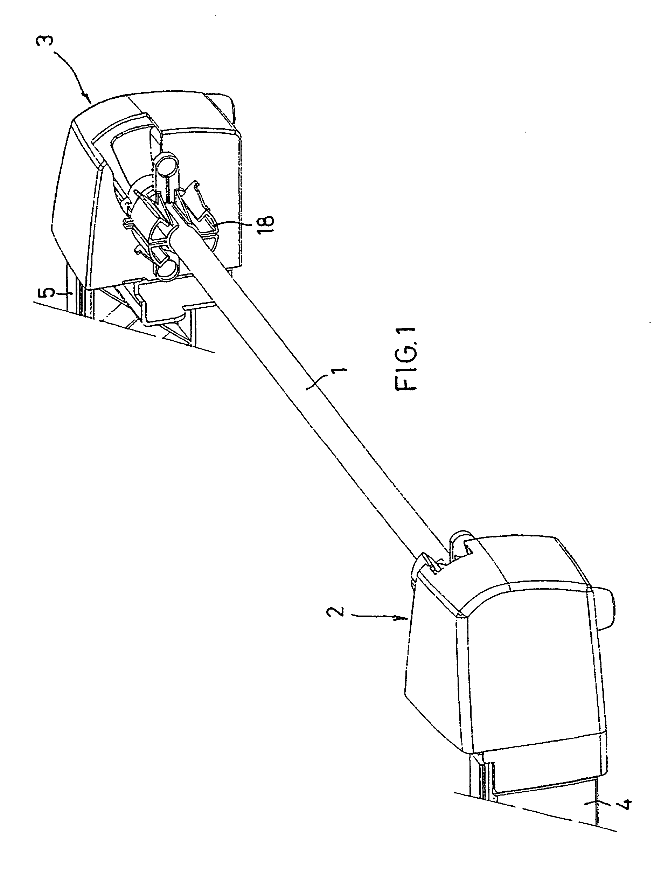

Figure 1 shows the general arrangement of the support bar carrying the roll of paper in a printer which incorporates the braking system of the present invention.
Figure 2 is a perspective view similar to Figure 1 showing the support arms and the support heads of the support bar with the covers removed.

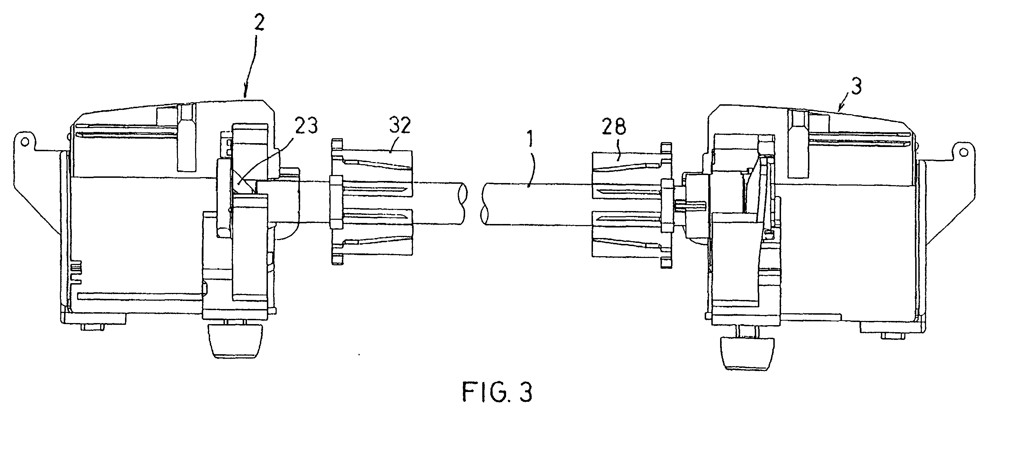

Figure 3 is a front elevational view of the same assembly of the two heads with the bar mounted therein.
Figure 4 is a schematic plan view showing the arrangement of one of the arms for supporting the bar carrying the roll and the spring acting axially in the other head.

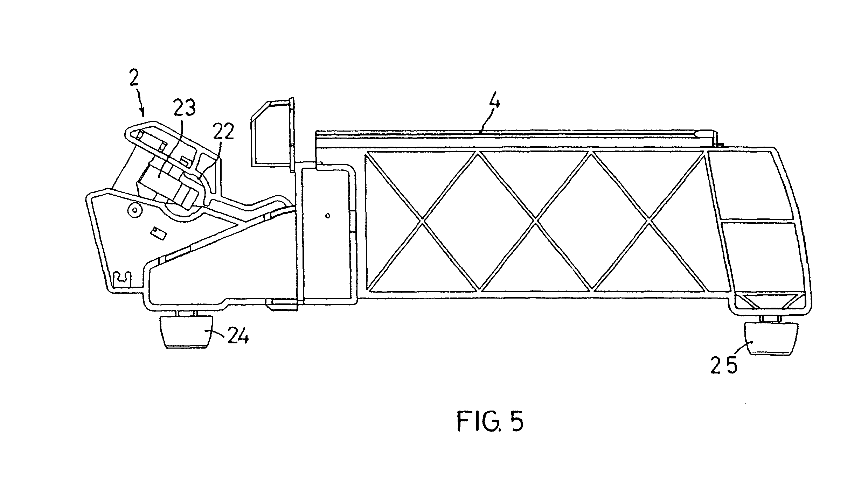

Figure 5 is a front elevational view of the arm corresponding to the head carrying the axial spring.

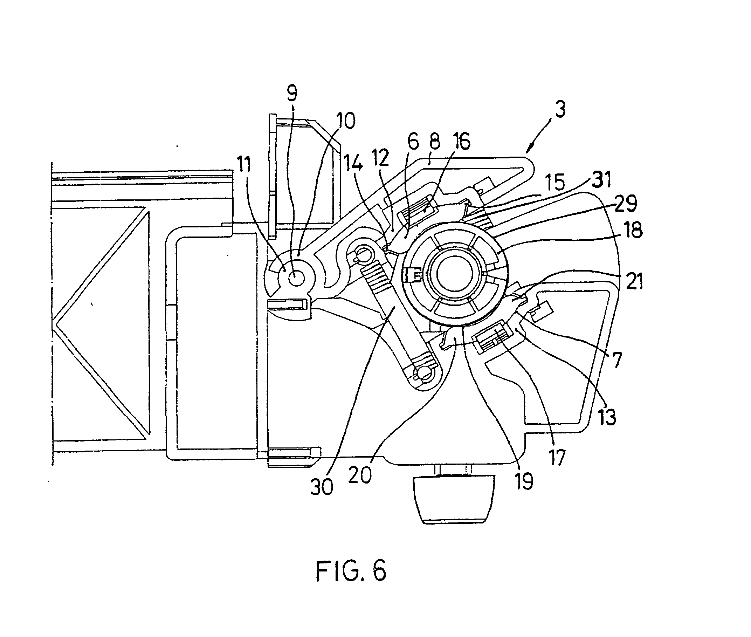

Figure 6 is a view showing the arrangement of the braking shoes.

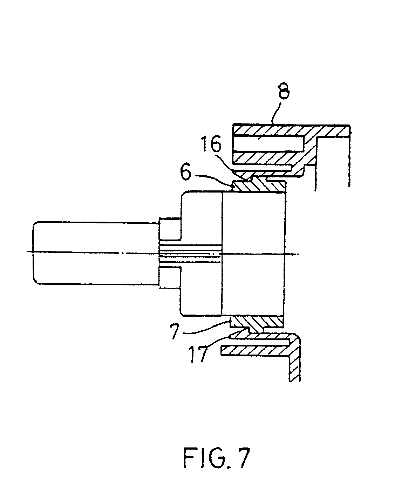

Figure 7 is a cross-section showing the axial fixing of the braking shoes.

The present invention is applicable to a copier having a bar 1 which is intended to support the roll of print medium, paper or the like and is coupled between two end heads 2 and 3 which are formed integrally with respective support arms 4 and 5 and are intended to receive the ends of the said bar 1, a braking mechanism being disposed in one of the heads, that is, the head 3 in the embodiment shown, solely an axially acting spring 23 being disposed in the other, opposite head, that is, the head 2. Springs 30 and 31 keep shoes 6 and 7 applied to a hub 18.

According to the present invention, at least one pair of braking shoes 6 and 7 made of a semi-resilient synthetic material is disposed in the head 3, the first shoe being incorporated in a pivoting arm 8 pivotable on a bar 9 and having a circular-arc-shaped region 10 which is coupled with a fixed hub or cylindrical body 11 and which has, as a geometric axis, the above-mentioned bar 9. Both the shoe 6 and the shoe 7 are centred purely axially in respective shoe-holders 12 and 13, the specially shaped ends 14 and 15 being housed in respective housings of matching shape in the shoe-holders. The said braking shoes are retained axially by respective tabs 16 and 17 which are formed integrally with the respective shoe holders 12 and 13 at one end and which also have respective teeth for the axial retention of the shoes.

Moreover, the shoes have respective central arcuate regions with a smaller radius than that of the hub 18 of the bar 1 to be braked, defining contact regions disposed substantially at the ends in order to bring about the braking effect in two well-defined regions. This characteristic, which is the same for both shoes 6 and 7, has been shown for the shoe 7 with the central portion 19 with a smaller radius of curvature than that of the hub 18 and with the opposite end portions 20 and 21 which exert the braking effect on the periphery of the hub 18 which has a stainless-steel outer covering or casing 29.

This arrangement achieves a braking effect directed onto the support bar, the braking effect being exerted at only one of the ends of the bar carrying the roll of print medium, achieving a well controlled friction without noticeable noise, as well as very satisfactory wear characteristics.

At the same time, given the construction of the shoe and shoe-holder system, the system can easily be modified to serve other machines with similar characteristics.

Moreover, the provision of the braking at only one of the ends of the bar reduces the number of parts of the braking system with a consequent reduction in costs.

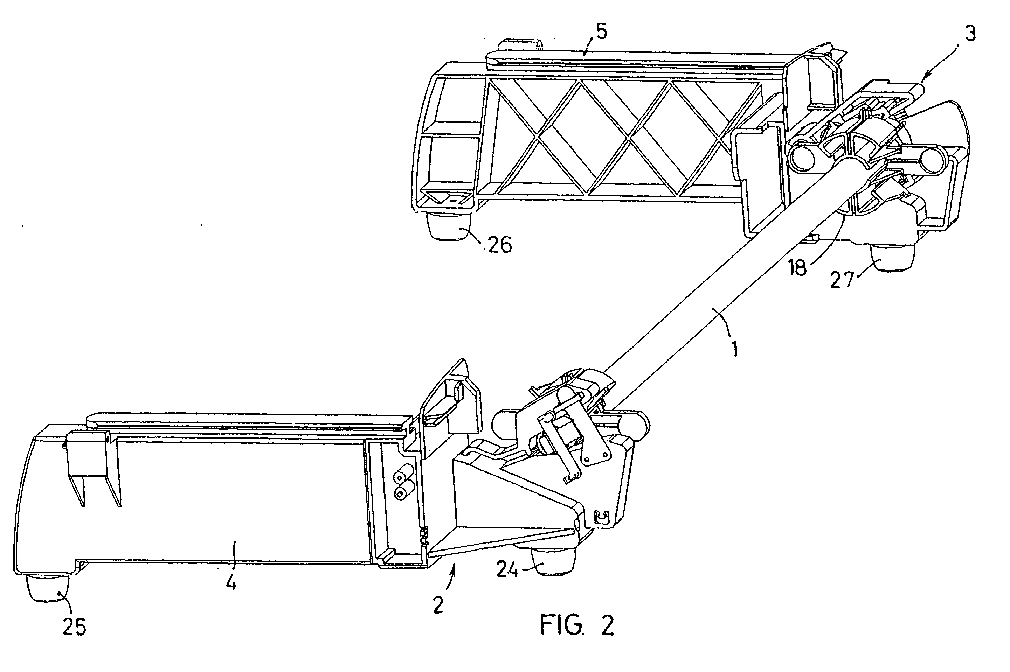

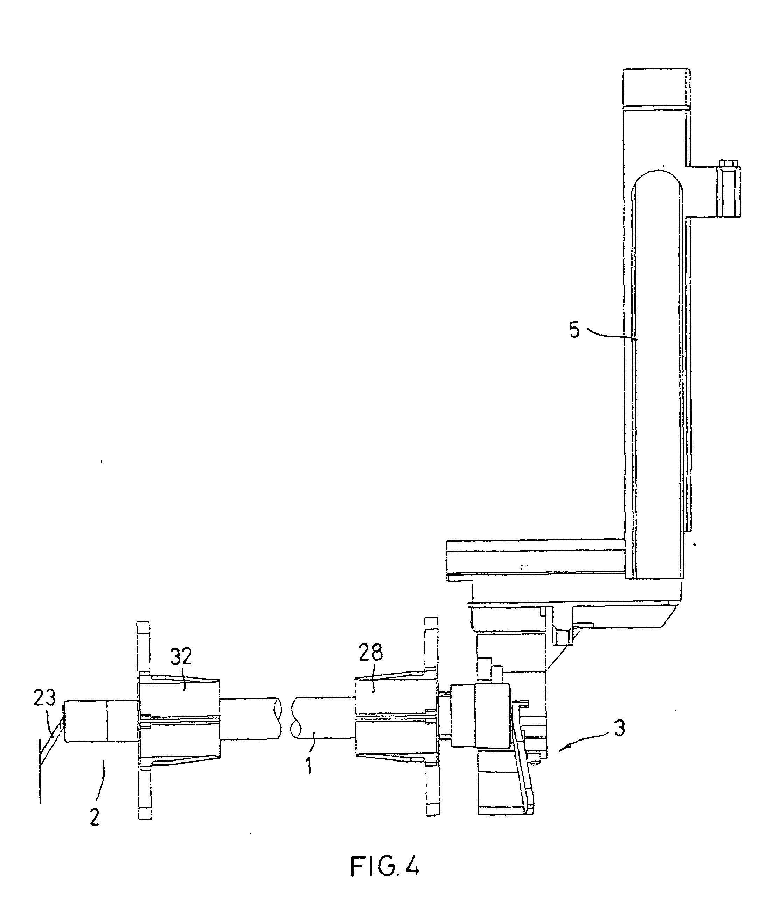

The head 2, which can be seen with the cap or cover removed in Figure 2 and in an elevational view in Figure 4, has a moulded housing 22 for the opposite end of the bar of the roll of paper to the hub 18, no braking shoes being included at the said end because they are not necessary given the high degree of effectiveness of the braking system of the present invention which permits operation with a single braking system at one end of the bar. However, a spring 23 is incorporated in the said head 2 and acts axially on the end of the bar 1, helping to retain and centre it.

In the case of a desk-top embodiment of the printer, it preferably has lower pads for bearing on the desk or location in which the printer is placed. The drawings show the pads 24 and 25 for the arm 4 as well as the pads 26 and 27 for the arm 5.

The roll of paper or other print medium is mounted on hubs 32 and 28 coupled close to the ends of the bar 1.

## Claims

1. A braking device for a support bar (1) for supporting a roll of paper or print medium in a printer, comprising a hub (18) coupled at one end of the support bar, at least a pair of braking shoes (6,7) and a biasing means (30,31);
wherein the biasing means (30,31) is arranged in use to continuously bias
the braking shoes (6,7) against the hub (18) with a substantially constant force and at a substantially constant radial position relative to the hub (18) and the hub (18) and the shoes (6,7) are respectively composed of different materials, the materials being a metal and a synthetic material chosen to provide in use a substantially uniform tautness of the print medium for the various phases of rotation of the bar (18).

2. A braking device according to claim 1, in which merely one end of the support bar for the printing media receives a substantial braking action.

3. Braking device according to claim 1 or claim 2, in which the pair of braking shoes (6, 7) are diametrically opposed in relation to the hub of the support bar to provide a braking action on said hub.

4. A braking device according to any preceding claims in which the braking shoes of the pair are removably assembled on respective shoe holders (12, 13).

5. A braking device according to any preceding claim, in which the hub is made out of stainless steel.

6. A braking device according to any preceding claim, in which the second end of the support bar for the printing media roll receives the action of an elastic means (23) acting in the axial direction of said support bar.

7. A braking device according to claim 6, in which the elastic means acting axially on the support bar for the printing media roll is an axial spring.

8. A braking device according to claim 4 or anyone of claims 5 to 7 when dependent thereon, in which the biasing means biases the braking shoes substantially towards each other, substantially along the diameter of the hub.

9. A braking device according to any preceding claim, in which the biasing means comprises one or more springs.

10. A braking device according to anyone of claims 4 to 9 dependent thereon, **characterized in that** the braking shoes are mounted coaxially in housings of matching shape in the shoe-holders, and are retained by means of resilient tabs (16, 17) which act on the front ends of the respective shoes by means of corresponding retaining teeth.

11. A braking device according to any preceding claims **characterized in that** the braking shoes are made of a semi-resilient synthetic material.

12. A braking device according to any preceding claim 4, **characterized in that** the braking shoes have respective regions of contact (20, 21) with the hub, the contact regions being situated close to the ends of theshoe and separated by a recessed region (19) in the shoe which does not contact the hub.

13. A braking device according to claim 1, **characterized in that** one of the shoe-holders is formed in a pivoting arm (8) acted on by the biasing means.

## Patentansprüche

1. Eine Bremsvorrichtung für eine Trägerwelle (1), zum Tragen einer Papierrolle oder eines Druckmediums in einem Drucker, umfassend eine Nabe (18), welche mit einem Ende der Trägerwelle verbunden ist, mindestens ein Paar Bremsbacken (6, 7) und eine Vorspanneinrichtung (30, 31):
wobei die Vorspanneinrichtung (30, 31) so angeordnet ist, daß die Bremsbacken (6, 7) während des Betriebs stetig mit einer im Wesentlichen konstanten Kraft und bei einer im Wesentlichen gleich bleibenden radialen Position im Verhältnis zu der Nabe (18) gegen die Nabe (18) drücken und die Nabe (18) und die Backen (6, 7) jeweils aus unterschiedlichen Materialien bestehen, wobei die Materialien ein Metall und ein synthetisches Material sind, welche ausgewählt sind, um während des Betriebs eine im Wesentlichen gleichmäßige Spannung des Druckmediums für die verschiedenen Phasen der Drehung der Nabe (18) zur Verfügung zu stellen.

2. Eine Bremsvorrichtung nach Anspruch 1, wobei lediglich ein Ende der Trägerwelle für das Druckmedium eine wesentliche Bremswirkung aufnimmt.

3. Eine Bremsvorrichtung nach Anspruch 1 oder Anspruch 2, wobei die beiden Bremsbacken (6, 7) diametral entgegengesetzt in Bezug auf die Nabe der Trägerwelle liegen, um eine Bremswirkung auf die Trägerwelle auszuüben.

4. Eine Bremsvorrichtung nach einem der vorhergehenden Ansprüche, wobei die Bremsbacken des Paares auf entsprechenden Backenhalterungen (12, 13) austauschbar montiert sind.

5. Eine Bremsvorrichtung nach einem der vorhergehenden Ansprüche, wobei die Nabe aus Edelstahl hergestellt ist.

6. Eine Bremsvorrichtung nach einem der vorhergehenden Ansprüche, wobei das zweite Ende der Trägerwelle für die Druckmediumrolle die Wirkung einer elastischen Einrichtung (23) aufnimmt, welche in axialer Richtung der Trägerwelle wirkt.

7. Eine Bremsvorrichtung nach Anspruch 6, wobei die elastische Einrichtung, welche axial auf die Trägerwelle für die Druckmediumrolle einwirkt, eine axiale Feder ist.

8. Eine Bremsvorrichtung nach Anspruch 4 oder einem der Ansprüche 5 bis 7, soweit sie davon abhängen, wobei die Vorspanneinrichtung die Bremsbacken im Wesentlichen gegeneinander drückt, im Wesentlichen entlang des Durchmessers der Nabe.

9. Eine Bremsvorrichtung nach einem der vorhergehenden Ansprüche, wobei die Vorspanneinrichtung eine oder mehrere Federn umfaßt.

10. Eine Bremsvorrichtung nach einem der Ansprüche 4 bis 9, **dadurch gekennzeichnet, daß** die Bremsbacken koaxial in passend geformten Gehäusen in den Backenhaltern befestigt sind und mittels federnder Laschen (16, 17) festgehalten werden, welche auf die vorderen Enden der jeweiligen Backen mittels entsprechender Haltezähne wirken.

11. Eine Bremsvorrichtung nach einem der vorhergehenden Ansprüche, **dadurch gekennzeichnet, daß** die Bremsbacken aus halbfederndem synthetischen Material hergestellt sind.

12. Eine Bremsvorrichtung nach einem der vorhergehenden Ansprüche, **dadurch gekennzeichnet, daß** die Bremsbacken jeweils Kontaktbereiche (20, 21) mit der Nabe besitzen, wobei sich die Kontaktbereiche nahe an den Enden der Backen befinden und durch einen ausgesparten Bereich (19) in der Backe getrennt sind, der die Nabe nicht berührt.

13. Eine Bremsvorrichtung nach Anspruch 1, **dadurch gekennzeichnet, daß** einer der Backenhalter als Drehbalken (8) gestaltet ist, auf den durch die Vorspanneinrichtung eingewirkt wird.

## Revendications

1. Dispositif de freinage pour une barre de support (1) destinée à soutenir un rouleau de papier ou support d'impression dans une imprimante, comprenant un moyen (18) couplé à une extrémité de la barre de support, au moins une paire de patins de freinage (6,7) et des moyens de précontrainte (30,31);
dans lequel les moyens de sollicitation (30,31) sont configurés en service pour solliciter en continu les patins de freinage (6,7) contre le moyeu (18) avec une force sensiblement constante et à une position radiale sensiblement constante par rapport au moyeu (18) et le moyeu (18) et les patins (6,7) sont respectivement composés de matériaux différents, les matériaux étant un métal et une matière synthétique choisis pour fournir dans l'utilisation une tension sensiblement uniforme du support d'impression pour les différentes phases de rotation de la barre (18).

2. Dispositif de freinage selon la revendication 1, dans lequel une seule extrémité de la barre de support pour les supports d'impression reçoit une action de freinage sensible.

3. Dispositif de freinage selon la revendication 1 ou la revendication 2, dans lequel les patins de freinage (6,7) sont diamétralement opposés relativement au moyeu de la barre de support pour fournir une action de freinage sur ledit moyeu.

4. Dispositif du freinage selon l'une quelconque des revendications précédentes, dans lequel les patins de freinage de la paire sont assemblés de façon amovible sur les porte-patins respectifs (12-13).

5. Dispositif de freinage selon l'une quelconque des revendications précédentes, dans lequel le moyeu est réalisé en acier inoxydable.

6. Dispositif de freinage selon l'une quelconque des revendications précédentes, dans lequel la seconde extrémité de la barre de support pour le rouleau de support d'impression reçoit l'action d'un moyen élastique (23) agissant dans la direction axiale de ladite barre de support.

7. Dispositif de freinage selon la revendication 6, dans lequel les moyens élastiques agissant axialement sur la barre de support pour le rouleau de support d'impression est un ressort axial.

8. Dispositif de freinage selon la revendication 4 ou l'une quelconque des revendications 5 à 7, en cas de rattachement, dans lequel les moyens de sollicitation sollicitent les patins de freinage sensiblement l'un vers l'autre, sensiblement le long du diamètre du moyeu.

9. Dispositif de freinage selon l'une quelconque des revendications précédentes, dans lequel les moyens de sollicitation comprennent un ou plusieurs ressorts.

10. Dispositif de freinage selon l'une quelconque des revendications 4 à 9, **caractérisé en ce que** les patins de freinage sont montés coaxialement dans des logements de forme adaptée dans les porte-patins et sont retenus au moyen de languettes élastiques (16,17) qui agissent sur les extrémités avant des patins respectifs au moyen de dents de retenue correspondantes.

11. Dispositif de freinage selon l'une quelconque des revendications, **caractérisé en ce que** les patins de freinage sont réalisés à partir d'un matériau synthétique semi-élastique.

12. Dispositif de freinage selon l'une quelconque des revendications précédentes, **caractérisé en ce que** les patina de freinage présentent des zones de contact respectives (20,21) avec le moyeu, les zones de contact étant situées à proximité des extrémités du patin et séparées par une zone de dépression (19) dans le patin qui ne vient pas en contact avec le moyeu.

13. Dispositif de freinage selon la revendication 1, **caractérisé en ce que** l'un des porte-patin est formé dans un bras pivotant (8) sur lequel agissent les moyens de sollicitation.
